(19) Europäisches Patentamt
European Patent Office
Office européen des brevets

(11) **EP 2 550 112 B1**

(12) **EUROPÄISCHE PATENTSCHRIFT**

(45) Veröffentlichungstag und Bekanntmachung des Hinweises auf die Patenterteilung:
**07.10.2015 Patentblatt 2015/41**

(51) Int Cl.:
***F24H 1/12*** *(2006.01)*

(21) Anmeldenummer: **11711072.6**

(22) Anmeldetag: **24.03.2011**

(86) Internationale Anmeldenummer:
**PCT/EP2011/054555**

(87) Internationale Veröffentlichungsnummer:
**WO 2011/117358 (29.09.2011 Gazette 2011/39)**

(54) **VORRICHTUNG ZUM AUSBRINGEN EINES MEDIUMS MIT EINER EINSTELLBAREN TEMPERATUR ZUGEHÖRIGES VERFAHREN ZUR TEMPERATURREGELUNG UND ZUR KALIBRIERUNG**

DEVICE FOR DELIVERING A MEDIUM AT AN ADJUSTABLE TEMPERATURE, ASSOCIATED METHOD FOR TEMPERATURE CONTROL AND CALIBRATION

DISPOSITIF POUR DISTRIBUER UN MILIEU À TEMPÉRATURE AJUSTABLE ET PROCÉDÉ ASSOCIÉ POUR LA RÉGULATION DE LA TEMPÉRATURE ET POUR L'ÉTALONNAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2010 DE 102010012868**

(43) Veröffentlichungstag der Anmeldung:
**30.01.2013 Patentblatt 2013/05**

(73) Patentinhaber: **Kurz, Gerhard**
**75382 Althengstett (DE)**

(72) Erfinder: **SCHULZ, Detlef**
**72657 Altenriet (DE)**

(74) Vertreter: **Witte, Weller & Partner Patentanwälte mbB**
**Postfach 10 54 62**
**70047 Stuttgart (DE)**

(56) Entgegenhaltungen:
**WO-A1-03/012565      WO-A2-2006/121654**
**US-A- 5 755 670**

**Beschreibung**

Die vorliegende Erfindung betrifft eine Vorrichtung zum Ausbringen eines Mediums mit einer einstellbaren Temperatur, mit einer Pumpe, einem Schlauch, dessen eines Ende mit der Pumpe verbunden ist und dessen anderes Ende zum Ausbringen des Mediums vorgesehen ist, einem Heizelement, das entlang eines Abschnitts eines Schlauchs vorgesehen ist, derart, dass das durch den Schlauch strömende Medium erhitzt wird, wobei zwischen Heizelement und Medium ein Wärmewiderstand vorhanden ist, und einer Schaltung zur Einstellung, bspw. Steuerung der Temperatur des Heizelements. Die Erfindung betrifft auch ein Verfahren zur Regelung der Temperatur eines Mediums in einer solchen Vorrichtung und ein Verfahren zur Kalibrierung einer solchen Vorrichtung.

In vielen Bereichen der Technik ist es erforderlich, ein Medium, insbesondere ein flüssiges Medium, aus einem Vorratsbehälter zu einem entfernt davon liegenden Ort zu transportieren, um es dort benutzen zu können. Sehr häufig muss das Medium während des Transports aus dem Vorratsbehälter zu dem Verwendungsort erhitzt werden oder zumindest auf einer bestimmten Temperatur gehalten werden. Hierfür werden in dem zum Transport des Mediums vorgesehenen Schlauch elektrische Heizelemente eingesetzt, die die erforderliche Wärme erzeugen.

Problematisch dabei ist die Einstellung der Temperatur des Mediums, da sich die Parameter im Betrieb häufig ändern. Man denke beispielsweise daran, dass der Transport des Mediums für eine kurze Zeit unterbrochen wird. Bleiben die Heizelemente weiterhin an, kann das nicht mehr fließende Medium überhitzen und damit möglicherweise zerstört werden. Werden die Heizelemente ausgeschaltet, kühlt das Medium zu stark ab und hat nach Wiederaufnahme des Transports dann möglicherweise eine zu geringe Temperatur am Verwendungsort.

Vor diesem Hintergrund besteht die Aufgabe der Erfindung darin, eine Vorrichtung der eingangs genannten Art so weiterzubilden, dass eine Regelung der Temperatur des Mediums mit einfachen, kostengünstigen Mitteln möglich wird.

Diese Aufgabe wird von der eingangs genannten Vorrichtung dadurch gelöst, dass eine Widerstandserfassungseinrichtung vorgesehen ist, die mit dem Heizelement verbunden ist und ausgelegt ist, den Widerstand des Heizelements zu erfassen, eine Leistungserfassungseinrichtung vorgesehen ist, die mit dem Heizelement verbunden ist, um die zugeführte elektrische Leistung zu erfassen, und eine Regelungseinrichtung vorgesehen ist, die ausgelegt ist, auf der Basis der von der Widerstandserfassungseinrichtung und der Leistungserfassungseinrichtung ermittelten Werte und unter Berücksichtigung des Wärmewiderstands die Temperatur des Mediums zu ermitteln und abhängig davon die Temperatur des Heizelements einzustellen.

Dieser erfindungsgemäßen Lösung liegt der Gedanke zugrunde, bei der Berechnung der Temperatur des Mediums und damit der Temperatur-Regelung den Wärmewiderstand des Systems mit zu berücksichtigen. Der Wärmewiderstand beschreibt sozusagen den Verlust an Temperatur vom Heizelement zum Medium. Durch Ermitteln der Temperatur am Heizelement und der dem Heizelement zugeführten elektrischen Leistung kann unter Berücksichtigung des Wärmewiderstands die Temperatur des Mediums ermittelt werden. Auf der Basis des ermittelten Temperaturwerts des Mediums lässt sich dann die dem Heizelement zugeführte elektrische Leistung einstellen bzw. regeln, um die gewünschte Temperatur des Mediums zu erhalten.

Der Vorteil dieser Vorrichtung ist unter anderem darin zu sehen, dass die Regelung sehr stabil läuft, auch wenn sich die Parameter, also beispielsweise Transportgeschwindigkeit des Mediums, ändern. Die Regelungseinrichtung kann beispielsweise sehr schnell feststellen, wenn sich das Medium aufgrund einer geringeren Transportgeschwindigkeit stärker erwärmt, um als Reaktion darauf dann die an das Heizelement gelieferte elektrische Leistung zu reduzieren.

Ein weiterer Vorteil der erfindungsgemäßen Vorrichtung ist darin zu sehen, dass für die Regelung keine Temperatursensoren erforderlich sind. Das trägt einerseits zur Reduzierung der Kosten bei und vereinfacht zudem beispielsweise den Austausch eines Schlauchs.

Bei einer bevorzugten Weiterbildung ist das Heizelement aus einem Material hergestellt, das einen Temperaturbeiwert besitzt, der sich von null deutlich unterscheidet.

Diese Maßnahme wirkt sich insbesondere bei einer Kalibrierung des Systems vorteilhaft aus, da auch mit größeren Toleranzen gearbeitet werden kann, ohne die Genauigkeit der Temperaturregelung nachhaltig zu beeinflussen. Die häufig für Heizelemente eingesetzten Materialien, wie beispielsweise Konstantan, haben einen zu geringen Temperaturbeiwert, der unvorteilhaft wäre.

In einer bevorzugten Weiterbildung ist eine Kalibrierwert-Speichereinrichtung vorgesehen, in der Kalibrierwerte, insbesondere ein Widerstandswert des Heizelements für eine Referenztemperatur, ein Temperaturbeiwert und ein Wärmewiderstandswert abgelegt sind.

Es ist weiter bevorzugt, das Heizelement über eine Halbwellen- oder Vollwellensteuerungsschaltung mit einer Versorgungsspannung zu versorgen, wobei die Halbwellen- oder Vollwellensteuerungsschaltung über die Regelungseinrichtung gesteuert ist.

Diese Maßnahme hat den Vorteil, dass Funkstörungen und große Stromanstiege vermieden werden können, indem dem Heizelement jeweils nur eine Halbwelle einer Versorgungs-Wechselspannung zugeführt wird, wobei das hierfür erforderliche Schaltelement, wie beispielsweise ein Triac, am Spannungsnulldurchgang ein- und ausgeschaltet wird.

In einer bevorzugten Weiterbildung ist eine Temperaturerfassungseinrichtung vorgesehen, die ausgelegt ist, die Temperatur des Mediums im Bereich des einen Endes zu erfassen. Weiter bevorzugt ist eine Kalibrierungseinrichtung vorgesehen, die ausgelegt ist, vorgegebene spezifische Werte der Vorrichtung, insbesondere Wärmewiderstandswert, Temperaturbeiwert und Widerstandswert des Heizelements für eine Referenztemperatur zu bestimmen.

Die Temperaturerfassungseinrichtung wird im normalen Betrieb der Vorrichtung nicht eingesetzt sondern dient alleine der Ermittlung von Temperaturen während eines Kalibriervorgangs, der über die Kalibrierungseinrichtung ausgeführt wird. Die Temperaturerfassungseinrichtung kann beispielsweise ein NTC-Element umfassen.

Mit Hilfe der Kalibrierungseinrichtung ist es möglich, bestimmte vorrichtungsspezifische Werte auf der Grundlage verschiedener Temperaturmessungen und Widerstandsmessungen am Heizelement zu ermitteln. Diese Kalibrierwerte werden dann in der Kalibrierwert-Speichereinrichtung abgelegt.

Die der Erfindung zugrunde liegende Aufgabe wird auch von einem Verfahren zur Regelung der Temperatur eines Mediums gelöst, das folgende Schritte aufweist:

Erfassen des Widerstandswerts des Heizelements, Ermitteln der diesem Widerstandswert zugehörigen Heizelement-Temperatur, Erfassen der dem Heizelement zugeführten elektrischen Leistung,
Berechnen der Temperatur des Mediums im Schlauch auf der Basis der Heizelement-Temperatur, der elektrischen Leistung und eines Wärmewiderstandswerts, und
Einstellen der dem Heizelement zugeführten elektrischen Leistung abhängig von der berechneten Temperatur des Mediums.

Die Vorteile dieses erfindungsgemäßen Verfahrens entsprechen den im Zusammenhang mit der erfindungsgemäßen Vorrichtung bereits erläuterten Vorteilen, so dass darauf nicht weiter eingegangen werden muss. Zu erwähnen ist lediglich, dass dieses Verfahren ohne den Einsatz von Temperaturmesseinrichtungen auskommt. Es genügt alleine die Erfassung des Widerstandswerts des Heizelements, um darüber auf die Temperatur des Heizelements zu schließen, und die Erfassung der dem Heizelement zugeführten elektrischen Leistung. Mit Hilfe dieser beiden Messgrößen und dem Wärmewiderstandswert, der beispielsweise in einem Kalibrierungsverfahren ermittelt werden kann, lässt sich die Temperatur des Mediums berechnen als Ist-Größe für den Regelungsvorgang.

In einer bevorzugten Weiterbildung wird der Widerstandswert des Heizelements in Perioden erfasst, in denen das Heizelement nicht mit elektrischer Energie zur Erwärmung versorgt wird.

Diese Maßnahme hat den Vorteil, dass eine sehr genaue Widerstandsmessung möglich ist. Selbstverständlich wäre es auch denkbar, den Widerstandswert während einer Heizphase zu erfassen oder beispielsweise im Nulldurchgang der dem Heizelement zugeführten elektrischen Spannung.

Bei einer bevorzugten Weiterbildung des erfindungsgemäßen Verfahrens wird der Widerstandswert des Heizelements über eine Widerstands-Verhältnismessung ermittelt.

Diese Maßnahme hat den Vorteil, dass sie sehr genau ist.

Selbstverständlich gibt es auch andere Möglichkeiten, den Widerstandswert des Heizelements zu ermitteln.

Die Erfindung betrifft auch ein Verfahren zur Kalibrierung einer erfindungsgemäßen Vorrichtung, mit den Schritten:

Pumpen des Mediums durch den Schlauch hindurch und zurück zur Pumpe, wobei währenddessen folgende Schritte ausgeführt werden:

- Erfassen des Widerstandswerts des Heizelements, welches abgeschaltet ist, und der Temperatur des Mediums am einen Ende des Schlauchs nach einer ersten vorgebbaren Zeitdauer,
- Einschalten des Heizelements,
- Erfassen des Widerstandswerts des Heizelements und der Temperatur des Mediums nach einer zweiten vorgebbaren Zeitdauer,
- Abschalten des Heizelements,
- Erfassen des Widerstandswerts des Heizelements und der Temperatur des Mediums nach einer dritten vorgebbaren Zeitdauer, und
- Ermitteln des Widerstandswerts des Heizelements bei einer Referenztemperatur sowie des Temperaturbeiwerts und des Wärmewiderstands auf der Basis der erfassten Widerstandswerte und Temperaturen.

Das heißt mit anderen Worten, dass zunächst ein Medium, beispielsweise Wasser, im Kreis durch den Schlauch gepumpt wird, wobei das Heizelement die Temperatur des Mediums annimmt, da es selbst nicht mit elektrischer Energie versorgt wird. Nach einer ersten vorgebbaren Zeitdauer wird nun der Widerstandswert des Heizelements erfasst und die Temperatur des durchfließenden Mediums über einen Temperatursensor gemessen. Widerstandswert und Temperaturwert bilden ein erstes Wertepaar.

Anschließend wird das Heizelement mit vorzugsweise voller Leistung betrieben, so dass sich das fließende Medium langsam erhitzt. Nach einer vorgebbaren Zeitdauer, beispielsweise sieben Minuten, wird der Widerstand des Heizelements erfasst und die Temperatur des Mediums ermittelt. Aufgrund des vorhandenen Wärmewiderstands zwischen Heizelement und Medium kann davon ausgegangen werden, dass die Temperatur des Heizelements größer ist als die Temperatur des Mediums. Der Widerstandswert des Heizelements und die gemessene Temperatur des Mediums bilden ein weiteres Wertepaar.

Schließlich wird das Heizelement abgeschaltet, so dass sich die Temperatur des Heizelements und die Temperatur des Mediums langsam angleichen. Nach einer vorgebbaren Zeitdauer, beispielsweise eine Minute, wird der Widerstandswert des Heizelements erfasst und die Temperatur des Mediums gemessen. Widerstandswert und Temperatur bilden somit ein weiteres Wertepaar.

Auf der Basis dieser drei Wertepaare lassen sich verschiedene Größen berechnen, insbesondere der Widerstandswert des Heizelements bei einer Referenztemperatur, beispielsweise 25 °C, sowie der Temperaturbeiwert und der Wärmewiderstand.

Der Wärmewiderstand lässt sich beispielsweise auf der Grundlage der Differenz zwischen der Temperatur des Heizelements und der gemessenen Temperatur des Mediums und der dem Heizelement zugeführten Leistung ermitteln.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung. Die einzige Figur zeigt in schematischer Darstellung eine erfindungsgemäße Vorrichtung.

In der Figur ist in schematischer Darstellung eine Anlage gezeigt, die dazu geeignet ist, ein flüssiges Medium, beispielsweise Farbe oder Lack, auf eine zu behandelnde Fläche aufzutragen. Die Anlage ist allgemein mit dem Bezugszeichen 10 gekennzeichnet.

Die Anlage 10 umfasst unter anderem einen Vorratsbehälter 12, in dem das zu verarbeitende Medium, also beispielsweise Farbe oder Lack, aufbewahrt wird.

Die Anlage 10 umfasst ferner eine Pumpe 14, deren Einlassseite über eine Rohr- oder Schlauchverbindung mit dem Vorratsbehälter 12 verbunden ist. Die Ausgangsseite der Pumpe 14 ist mit einem Schlauch 16 verbunden, dessen der Pumpe 14 entgegengesetztes Ende 18 beispielsweise über ein Spritzventil verfügt.

An dieser Stelle sei angemerkt, dass in der Figur nur jene Komponenten der Anlage gezeigt sind, die für das Verständnis der Erfindung erforderlich sind. Es versteht sich, dass weitere Bauteile vorgesehen sind, um eine solche Anlage betreiben zu können.

Um das aus dem Vorratsbehälter 12 gepumpte Medium zu erwärmen, bzw. dessen Temperatur zu halten, ist der Schlauch 16 mit einem Heizelement versehen, das in der Figur mit dem Bezugszeichen 20 gekennzeichnet ist. Das Heizelement 20 erstreckt sich über einen Großteil der Länge des Schlauchs 16, so dass ein Wärmeeintrag in das Medium während des nahezu gesamten Durchlaufs durch den Schlauch 16 möglich ist. Bei dem Heizelement 20 kann es sich beispielsweise um einen Heizdraht handeln, der durch Beaufschlagung mit einer Spannung Wärme über dessen gesamte Länge erzeugt.

Das Heizelement 20 ist Teil einer Steuer- und Regelungseinrichtung, die mit dem Bezugszeichen 22 gekennzeichnet ist.

Die Steuer- und Regelungseinrichtung 22 dient dazu, dem Heizelement 20 so viel Energie zuzuführen, dass das am Ende des Schlauchs 16 ausgebrachte Medium eine vorgebbare Temperatur besitzt.

Die Steuer- und Regelungseinrichtung 22 ist an ein Wechselspannungsnetz angeschlossen, das die erforderliche Energie sowohl für das Heizelement 20 als auch für die anderen Komponenten liefert. In Reihe zu dem Heizelement 20 liegt ein Schaltelement 24, das das Heizelement 20 gesteuert ein- und ausschaltet. Bevorzugt wird das Heizelement 20 nur jeweils für eine Halbwelle eingeschaltet und während der darauffolgenden Halbwelle wieder abgeschaltet, um auf diese Weise Funkstörungen und große Stromanstiege zu vermeiden. Bei dem Schaltelement 24 kann es sich beispielsweise um ein Triac handeln.

Die Steuer- und Regelungseinrichtung 22 verfügt ferner über eine Regelungsschaltung 30, die dazu ausgelegt ist, das Schaltelement 24 so anzusteuern, dass eine vorgebbare Temperatur des Mediums erhalten wird. Die gewünschte Temperatur des Mediums kann beispielsweise über ein Stellelement 32, das mit der Regelungsschaltung 30 verbunden ist, eingestellt werden. Zudem kann die Temperatur des Mediums über eine digitale Anzeigeeinrichtung 34, die ebenfalls mit der Regelungsschaltung 30 verbunden ist, dem Benutzer angezeigt werden.

Die Regelungsschaltung 30 selbst verfügt über einen Regler 36, der Daten von einer Leistungserfassungseinrichtung 38 und einer Widerstandserfassungseinrichtung 40 erhält. Darüber hinaus hat der Regler 36 Zugriff auf einen Speicher 42, in dem Kalibrierwerte abgelegt sind.

Die Leistungserfassungseinrichtung 38 ist dazu ausgelegt, die dem Heizelement 20 zugeführte elektrische Leistung zu erfassen.

Die Widerstandserfassungseinrichtung 40 ist mit dem Heizelement 20 verbunden und dient dazu, den Widerstandswert (ohmscher Widerstand) des Heizelements 20 zu erfassen. Hierzu gibt es unterschiedliche Möglichkeiten, wobei bevorzugt eine Widerstands-Verhältnismessung zum Einsatz kommt.

Die Anlage 10 verfügt noch über ein Temperaturmesselement 44, das am pumpenseitigen Ende des Schlauchs 16 angeordnet ist, um die Temperatur des Mediums zu messen. Das Temperaturmesselement 44 ist mit dem Regler 36 elektrisch verbunden. Bei dem Temperaturmesselement 44 kann es sich beispielsweise um ein NTC-Bauelement handeln.

An dieser Stelle sei angemerkt, dass das Temperaturmesselement 44 nur während einer Kalibrierungsphase der Steuer- und Regelungseinrichtung zum Einsatz kommt. Während des normalen Betriebs der Anlage 10 wird die vom Temperaturmesselement 44 gelieferte Information nicht benötigt.

Nachfolgend wird nun beschrieben, wie die Temperatur des Mediums geregelt wird. Dem Regelungsvorgang liegt dabei die Idee zugrunde, den Wärmewiderstand $R_{th}$ zwischen dem Heizelement 20 und dem im Schlauch 16 befindlichen Medium mit zu berücksichtigen. Dieser Wärmewiderstand ist nicht notwendigerweise konstant, es ist jedoch eine anlagenspezifische Größe, die im Wege einer Kalibrierung, auf die später noch eingegangen wird, berechnet werden kann.

Im normalen Betrieb der Anlage 10 wird das durch den Schlauch 16 gepumpte Medium über das Heizelement 20 erwärmt. Der Regler 36 steuert hierfür das Schaltelement 24 an. Aufgrund des Wärmewiderstands ist jedoch davon auszugehen, dass das durch den Schlauch 16 fließende Medium nicht die gleiche Temperatur am Ende haben wird wie das Heizelement 20. Das heißt mit anderen Worten, dass zur Erzielung einer bestimmten Temperatur des Mediums das Heizelement 20 eine um einen bestimmten Vorhalt höheren Wert haben muss.

Um festzustellen, welche Temperatur das Heizelement 20 besitzt, wird eine Widerstandsmessung über die Widerstandserfassungseinrichtung 40 durchgeführt, wobei der gemessene Widerstandswert auf die Temperatur schließen lässt. Hierfür ist jedoch ein Widerstands-Referenzwert, beispielsweise für die Temperatur 25 °C, erforderlich sowie der Temperaturbeiwert $\alpha$ des Heizelements 20. Mit Hilfe der Formel:

$$R(T) = R(T_{ref}) \cdot (1+\alpha \cdot \Delta T)$$

lässt sich die Temperatur ermitteln, die zu einem bestimmten Widerstandswert R(T) des Heizelements 20 gehört. Notwendig hierfür sind lediglich der Widerstandswert $R(T_{ref})$ und der Temperaturbeiwert, die im Speicher 42 abgelegt sind.

Ist die Temperatur am Heizelement 20 bekannt, lässt sich unter Zuhilfenahme des Wärmewiderstands $R_{th}$ und der dem Heizelement 20 zugeführten elektrischen Leistung, die über die Leistungserfassungseinrichtung 38 ermittelt wird, die Temperatur des Mediums $T_{medium}$ bestimmen. Die Formel hierfür lautet:

$$T_{medium} = T_h - R_{th} \cdot L,$$

wobei $T_h$ die Temperatur des Heizelements 20 und L die dem Heizelement 20 zugeführte Leistung ist.

Über diesen Zusammenhang kann die Leistung über den Regler 36 und das Schaltelement 24 so gesteuert werden, dass die gewünschte Temperatur $T_{medium}$ erreicht und gehalten wird.

Die Messung des Widerstands des Heizelements 20 kann so oft wie erforderlich durchgeführt werden, wobei allerdings bevorzugt die Messung dann erfolgt, wenn das Schaltelement 24 ausgeschaltet ist.

Wie zuvor erwähnt, benötigt der Regler 36 mehrere anlagenspezifische Größen, nämlich den Temperaturbeiwert, den Widerstandswert des Heizelements 20 bei einer Referenztemperatur und den Wärmewiderstand $R_{th}$. Diese drei Größen lassen sich mit Hilfe eines Kalibrierungsverfahrens ermitteln.

Hierfür wird ein Medium, beispielsweise Wasser, durch den Schlauch 16 gepumpt und das am Ende 18 austretende Medium wieder zur Einlassseite der Pumpe 14 geführt, so dass ein Kreislauf gebildet wird.

Während des Kalibrierungsverfahrens ist das Temperaturmesselement 44 aktiviert und misst die Temperatur des Mediums am Beginn des Schlauchs 16.

In einer ersten Phase, die beispielsweise etwa eine Minute dauert, wird das Medium durch den Schlauch 16 gepumpt, wobei das Heizelement 20 abgeschaltet ist. Am Ende dieser ersten Phase wird die Temperatur des Mediums über das Temperaturmesselement 44 gemessen sowie der Widerstandswert des Heizelements 20. Das erhaltene Wertepaar R1, T1 wird gespeichert.

In der darauffolgenden zweiten Phase, die im vorliegenden Ausführungsbeispiel sieben Minuten dauert, wird das Heizelement 20 mit voller Leistung betrieben. Am Ende dieser Phase wird die Temperatur des Mediums wiederum gemessen, wie auch der Widerstandswert des Heizelements 20. Das entsprechende Wertepaar R3, T3 wird wieder gespeichert. Zusätzlich wird noch die dem Heizelement 20 zugeführte elektrische Leistung erfasst und als Wert L abgespeichert.

In der sich anschließenden dritten Phase, die beispielsweise eine Minute dauert, wird das Heizelement 20 wieder abgeschaltet. Am Ende dieser Phase wird der Widerstand des Heizelements 20 sowie die Temperatur des Mediums ermittelt. Das sich daraus ergebende Wertepaar R2, T2 wird wiederum abgespeichert.

Der Widerstands-Referenzwert $R(T_{ref})$ wird auf der Grundlage der Wertepaare R1, T1 und R2, T2 festgelegt, wobei hier angenommen wird, dass das Medium jeweils die gleiche Temperatur wie das Heizelement 20 besitzt.

Unter der gleichen Annahme kann anschließend der Temperaturbeiwert $\alpha$ berechnet werden, wobei hierfür die beiden Wertepaare R1, T1 und R2, T2 eingesetzt werden. Unter Zugrundelegung der Formel:

$$R2 = R1 \cdot (1+\alpha \cdot (T2-T1))$$

lässt sich der Temperaturbeiwert $\alpha$ errechnen.

Anschließend lässt sich mit Hilfe des Wertepaars R3, T3 und der erfassten elektrischen Leistung, die dem Heizelement 20 zugeführt wurde, der Wärmewiderstand $R_{th}$ wie folgt berechnen:

$$R_{th} = (T_{h3}\text{-}T3) : L,$$

wobei $T_{h3}$ die Temperatur des Heizelements ist, die sich aus dem Widerstandswert R3 ergibt. Die Temperatur T3 ist die vom Temperaturmesselement 44 gemessene Temperatur des Mediums.

Der errechnete Wärmewiderstand $R_{th}$ wird dann zusammen mit den anderen berechneten Größen im Speicher 42 abgelegt. Im Speicher 42 sind folglich der Widerstandswert für eine Referenztemperatur, der Temperaturbeiwert des Heizelements 20 sowie der Wärmewiderstand abgespeichert. Diese Größen werden für den Regelungsvorgang, wie er zuvor beschrieben wurde, benötigt.

Insgesamt zeigt sich also, dass die Regelung der Temperatur des Mediums sehr einfach vorgenommen werden kann, ohne dass Temperatursensoren entlang des Schlauchs 16 erforderlich wären. Darüber hinaus lassen sich durch das erfindungsgemäße Kalibrierungsverfahren alle benötigten Größen für den Regelungsvorgang automatisch ermitteln. Selbstverständlich würde die Regelung auch funktionieren, wenn diese Größen nicht automatisch über ein Kalibrierungsverfahren im Speicher 42 abgelegt werden, sondern manuell bestimmt und abgespeichert werden.

**Patentansprüche**

1. Vorrichtung zum Ausbringen eines Mediums mit einer einstellbaren Temperatur, mit
   einer Pumpe (14),
   einem Schlauch (16), dessen eines Ende mit der Pumpe (14) verbunden ist und dessen anderes Ende zum Ausbringen des Mediums vorgesehen ist,
   einem Heizelement (20), das entlang eines Abschnitts des Schlauchs (16) vorgesehen ist, derart, dass das durch den Schlauch (16) strömende Medium erhitzt wird, wobei zwischen Heizelement (20) und Medium ein Wärmewiderstand vorhanden ist, und
   einer Schaltung zur Einstellung der Temperatur des Heizelements,
   eine Widerstandserfassungseinrichtung (40), die mit dem Heizelement (20) verbunden ist und ausgelegt ist, den Widerstand des Heizelements (20) zu erfassen,
   eine Leistungserfassungseinrichtung (38), die mit dem Heizelement (20) verbunden ist, um die zugeführte elektrische Leistung zu erfassen,

**gekennzeichnet durch** eine Regelungseinrichtung (30), die ausgelegt ist, auf der Basis der von der Widerstandserfassungseinrichtung (40) und der Leistungserfassungseinrichtung (38) ermittelten Werte und unter Berücksichtigung des Wärmewiderstands des Systems die Temperatur des Mediums zu ermitteln und abhängig davon die Temperatur des Heizelements (20) einzustellen.

2. Vorrichtung nach Anspruch 1, **dadurch gekennzeichnet, dass** das Heizelement (20) aus einem Material hergestellt ist, das einen Temperaturbeiwert besitzt, der sich von null deutlich unterscheidet.

3. Vorrichtung nach Anspruch 1 oder 2, **dadurch gekennzeichnet, dass** eine Kalibrierwert-Speichereinrichtung vorgesehen ist, in der Kalibrierwerte, insbesondere ein Widerstandswert des Heizelements (20) für eine Referenz-temperatur, ein Temperaturbeiwert und ein Wärmewiderstandswert des Systems abgelegt sind.

4. Vorrichtung nach einem der Ansprüche 1 bis 3, **dadurch gekennzeichnet, dass** das Heizelement (20) über eine Halbwellen- oder Vollwellensteuerungsschaltung mit einer Versorgungsspannung versorgt ist, wobei die Halbwellen- oder Vollwellensteuerungsschaltung über die Regelungseinrichtung (30) gesteuert ist.

5. Vorrichtung nach einem der vorhergehenden Ansprüche, **dadurch gekennzeichnet, dass** eine Temperaturerfassungseinrichtung vorgesehen ist, die ausgelegt ist, die Temperatur des Mediums im Bereich des einen Endes zu erfassen.

6. Vorrichtung nach einem der vorhergehenden Ansprüche, **dadurch gekennzeichnet, dass** eine Kalibrierungseinrichtung vorgesehen ist, die ausgelegt ist, vorgegebene spezifische Werte der Vorrichtung, insbesondere Wärmewiderstandswert des Systems Temperaturbeiwert und Widerstandswert des Heizelements (20) für eine Referenztemperatur zu bestimmen.

7. Verfahren zur Regelung der Temperatur eines Mediums in einer Vorrichtung nach einem der Ansprüche 1 bis 6, mit den Schritten:

   Erfassen des Widerstandswerts des Heizelements (20),
   Ermitteln der diesem Widerstandswert zugehörigen Heizelement-Temperatur,
   Erfassen der dem Heizelement (20) zugeführten elektrischen Leistung,
   Berechnen der Temperatur des Mediums im Schlauch (16) auf der Basis der Heizelement-Temperatur, der elektrischen Leistung und eines Wärmewiderstandswerts des Systems, und Einstellen der dem Heizelement (20) zugeführten elektrischen Leistung abhängig von der berechneten Temperatur des Mediums.

8. Verfahren nach Anspruch 7, **dadurch gekennzeichnet, dass** der Widerstandswert des Heizelements (20) in Perioden erfolgt, in denen das Heizelement (20) nicht mit elektrischer Leistung zur Erwärmung versorgt wird.

9. Verfahren nach Anspruch 7 oder 8, **dadurch gekennzeichnet, dass** der Widerstandswert des Heizelements (20) über eine Widerstands-Verhältnismessung ermittelt wird.

10. Verfahren zur Kalibrierung einer Vorrichtung nach einem der Ansprüche 1 bis 6, mit Pumpen des Mediums durch den Schlauch (16) hindurch und zurück zur Pumpe (14), wobei währenddessen folgende Schritte ausgeführt werden:

  - Erfassen des Widerstandswerts des Heizelements (20) (R1), welches abgeschaltet ist, und der Temperatur (T1) des Mediums am einen Ende des Schlauchs (16) nach einer ersten vorgebbaren Zeitdauer,
  - Einschalten des Heizelements (20),
  - Erfassen des Widerstandswerts des Heizelements (20) (R3) und der Temperatur (T3) des Mediums nach einer zweiten vorgebbaren Zeitdauer,
  - Abschalten des Heizelements (20),
  - Erfassen des Widerstandswerts des Heizelements (20) (R2) und der Temperatur (T2) des Mediums nach einer dritten vorgebbaren Zeitdauer, und
  - Ermitteln des Widerstandswerts ($R(T_{ref})$) des Heizelements (20) bei einer Referenztemperatur ($T_{ref}$), beispielsweise 25° C, sowie des Temperaturbeiwerts ($\alpha$) und des Wärmewiderstands ($R_{th}$) des Systems auf der Basis der erfassten Widerstandswerte und Temperaturen.

11. Verfahren nach Anspruch 10, **dadurch gekennzeichnet, dass** der Wärmewiderstand ($R_{th}$) des Systems berechnet wird zu

$$R_{th} = \Delta T / L,$$

wobei $\Delta T$ die Differenz aus der Temperatur des Heizelements (20) ermittelt aus dessen Widerstand (R3) und der gemessenen Temperatur des Mediums (T3) ist, und L die dem Heizelement (20) zugeführte elektrische Leistung ist.

**Claims**

1. An apparatus for delivering a medium at an adjustable temperature, said apparatus comprising
   a pump (14),
   a hose (16), of which one end is connected to the pump (14), and of which the other end is provided for delivery of the medium,
   a heating element (20), which is provided along a portion of the hose (16) in such a way that the medium flowing through the hose (16) is heated, wherein a thermal resistance is present between the heating element (20) and the medium, and
   a circuit for adjusting the temperature of the heating element,
   a resistance detection device (40), which is connected to the heating element (20) and is designed to detect the resistance of the heating element (20),
   a power detection device (38), which is connected to the heating element (20) so as to detect the fed electrical power,
   **characterized by**
   a regulation device (30), which is designed to establish the temperature of the medium on the basis of the values established by the resistance detection device (40) and the power detection device (38) and, under consideration of the thermal resistance of the system, to adjust the temperature of the heating element (20) according to said established temperature of the medium.

2. The apparatus as claimed in claim 1, **characterized in that** the heating element (20) is produced from a material which has a temperature coefficient which differs considerably from zero.

3. The apparatus as claimed in claim 1 or 2, **characterized in that** a calibration value storage device is provided, in which calibration values are stored, in particular a resistance value of the heating element (20) for a reference temperature, a temperature coefficient, and a thermal resistance value of the system.

4. The apparatus as claimed in one of claims 1 to 3, **characterized in that** the heating element (20) is supplied with a supply voltage via a half-wave control circuit or a full-wave control circuit, wherein the half-wave control circuit or full-wave control circuit is controlled by the regulation device (30).

5. The apparatus as claimed in one of the preceding claims, **characterized in that** a temperature detection device is provided, which is designed to detect the temperature of the medium in the region of one end.

6. The apparatus as claimed in one of the preceding claims, **characterized in that** a calibration device is provided, which is designed to determine predefined specific values of the apparatus, in particular the thermal resistance value of the system, temperature coefficient, and resistance value of the heating element (20) for a reference temperature.

7. A method for regulating the temperature of a medium in an apparatus as claimed in one of claims 1 to 6, said method comprising the following steps:

   detecting the resistance value of the heating element (20),
   establishing the heating element temperature corresponding to this resistance value,
   detecting the electrical power fed to the heating element (20),
   calculating the temperature of the medium in the hose (16) on the basis of the heating element temperature, the electrical power, and a thermal resistance value of the system, and
   adjusting the electrical power fed to the heating element (20) according to the calculated temperature of the medium.

8. The method as claimed in claim 7, **characterized in that** the resistance value of the heating element (20) is detected in periods in which the heating element (20) is not supplied with electrical power for heating.

9. The method as claimed in claim 7 or 8, **characterized in that** the resistance value of the heating element (20) is established via a resistance ratio measurement.

10. A method for calibrating an apparatus as claimed in one of claims 1 to 6, said method comprising pumping the medium through the hose (16) and back to the pump (14), wherein the following steps are carried out during this process:

    - the resistance value (R1) of the heating element (20), which is switched off, and the temperature (T1) of the medium at one end of the hose (16) are detected after a first, predefinable period of time,
    - the heating element (20) is switched on,
    - the resistance value (R3) of the heating element (20) and the temperature (T3) of the medium are detected after a second, predefinable period of time,
    - the heating element (20) is switched off,
    - the resistance value (R2) of the heating element (20) and the temperature (T2) of the medium are detected after a third, predefinable period of time, and
    - the resistance value ($R(T_{ref})$) of the heating element (20) at a reference temperature ($T_{ref}$),

for example 25°C, the temperature coefficient ( ), and the thermal resistance of the system ($R_{th}$) are established on the basis of the detected resistance values and temperatures.

11. The method as claimed in claim 10, **characterized in that** the thermal resistance of the system ($R_{th}$) is calculated as

$$R_{th} = \Delta T/L,$$

wherein $\Delta T$ is the difference from the temperature of the heating element (20) established from the resistance (R3) thereof and the measured temperature of the medium (T3), and L is the electrical power fed to the heating element (20).

## Revendications

1. Appareil pour extraire un fluide ayant une température réglable, comprenant
   une pompe (14),
   un tuyau (16) dont une extrémité est reliée à la pompe (14) et dont l'autre extrémité est destinée à l'extraction du fluide,
   un élément chauffant (20) est monté le long d'une portion du tuyau (16) de telle sorte que le fluide qui s'écoule à travers le tuyau (16) est chauffé, une résistance thermique se trouvant entre l'élément chauffant (20) et le fluide, et
   un circuit destiné à régler la température de l'élément chauffant,
   un dispositif de détection de résistance (40) qui est relié à l'élément chauffant (20) et qui est conçu pour détecter la résistance de l'élément chauffant (20),
   un dispositif de détection de puissance (38) qui est relié à l'élément chauffant (20) pour détecter la puissance électrique qui lui y est acheminée,
   **caractérisé par**
   un dispositif de régulation (30) qui est conçu pour, en se basant sur les valeurs déterminées par le dispositif de détection de résistance (40) et le dispositif de détection de puissance (38), et en tenant compte de la résistance thermique du système, déterminer la température du fluide et, en fonction de celle-ci, régler la température de l'élément chauffant (20).

2. Appareil selon la revendication 1, **caractérisé en ce que** l'élément chauffant (20) est fabriqué dans un matériau qui possède un coefficient de température qui est nettement différent de zéro.

3. Appareil selon la revendication 1 ou 2, **caractérisé en ce qu'**il existe un dispositif de mémorisation de valeur calibrée de calibrage dans lequel sont stockées les valeurs de calibrage, notamment une valeur de résistance de l'élément chauffant (20) pour une température de référence, un coefficient de température et une valeur de résistance thermique du système.

**4.** Appareil selon l'une des revendications 1 à 3, **caractérisé en ce que** l'élément chauffant (20) est alimenté avec une tension d'alimentation par le biais d'un circuit de commande à demies-ondes ou à ondes pleines, le circuit de commande à demies-ondes ou à ondes pleines étant commandé par le biais du dispositif de régulation (30).

**5.** Appareil selon l'une des revendications précédentes, **caractérisé en ce qu'**il existe un dispositif de détection de température, lequel est conçu pour détecter la température du fluide dans la zone de l'une extrémité.

**6.** Appareil selon l'une des revendications précédentes, **caractérisé en ce qu'**il existe un dispositif de calibrage, lequel est conçu pour déterminer des valeurs spécifiques prédéfinies de l'appareil, notamment la valeur de la résistance thermique du système, le coefficient de température et la valeur de la résistance de l'élément chauffant (20) pour une température de référence.

**7.** Procédé de régulation de la température d'un fluide dans un appareil selon l'une des revendications 1 à 6, comprenant les étapes suivantes :

detection de la valeur de la résistance de l'élément chauffant (20),
détermination de la température de l'élément chauffant associée à cette valeur de résistance,
détection de la puissance électrique acheminée à l'élément chauffant (20),
calcul de la température du fluide dans le tuyau (16) en se basant sur la température de l'élément chauffant, la puissance électrique et une valeur de la résistance thermique du système, et réglage de la puissance électrique acheminée à l'élément chauffant (20) en fonction de la température calculée du fluide.

**8.** Procédé selon la revendication 7, **caractérisé en ce que** la valeur de la résistance de l'élément chauffant (20) est détectée dans les périodes pendant lesquelles l'élément chauffant (20) n'est pas alimenté en énergie électrique pour son chauffage.

**9.** Procédé selon la revendication 7 ou 8, **caractérisé en ce que** la valeur de la résistance de l'élément chauffant (20) est déterminée par le biais d'une mesure de rapport de résistances.

**10.** Procédé de calibrage d'un appareil selon l'une des revendications 1 à 6, comprenant :

pompage du fluide à travers le tuyau (16) et retour à la pompe (14), les étapes suivantes étant exécutées pendant cette opération :

- détection de la valeur de la résistance de l'élément chauffant (20) (R1), qui est mis hors circuit, et de la température (T1) du fluide à une extrémité du tuyau (16) après une première période pouvant être prédéfinie,
- mise en circuit de l'élément chauffant (20),
- détection de la valeur de la résistance de l'élément chauffant (20) (R3) et de la température (T3) après une deuxième période pouvant être prédéfinie,
- mise hors circuit de l'élément chauffant (20),
- détection de la valeur de la résistance de l'élément chauffant (20) (R2) et de la température (T2) après une troisième période pouvant être prédéfinie,
- détermination de la valeur de la résistance $(R(T_{ref}))$ de l'élément chauffant (20) à une température de référence $(T_{ref})$, par exemple 25 °C, ainsi que du coefficient de température $(\alpha)$ et de la résistance thermique $(R_{th})$ du système sur la base des valeurs de résistance et des températures détectées.

**11.** Procédé selon la revendication 10, **caractérisé en ce que** la résistance thermique $(R_{th})$ du système est calculée selon

$$R_{th} = \Delta T/L,$$

où $\Delta T$ désigne la différence entre la température de l'élément chauffant (20) déterminée à partir de sa résistance (R3) et la température mesurée du fluide (T3), et L désigne la puissance électrique acheminée à l'élément chauffant (20).

EP 2 550 112 B1

L

N

PE

$R_{th}$

P

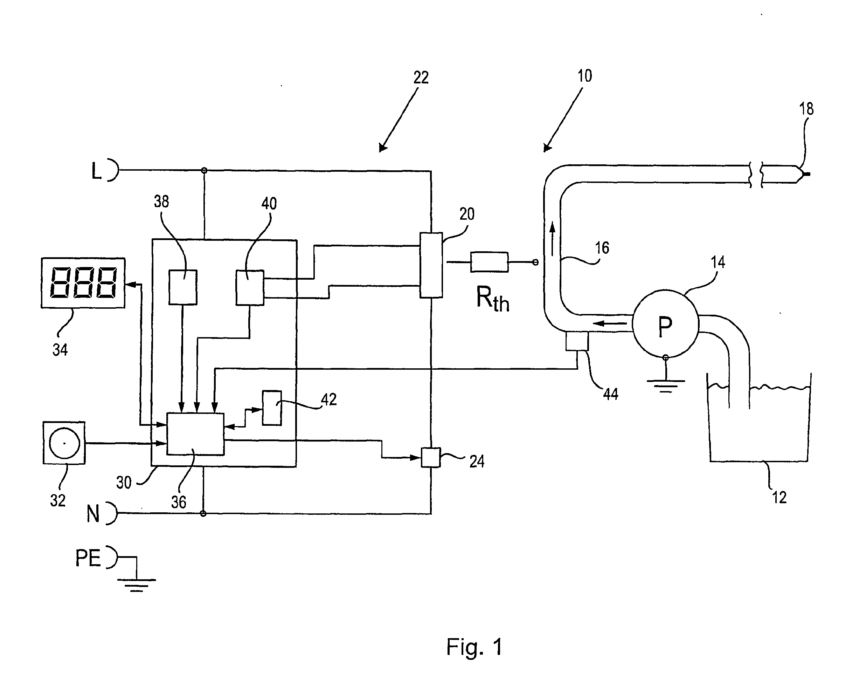

Fig. 1